# EUROPEAN PATENT SPECIFICATION

(11) **EP 3 000 725 B1**
(45) Date of publication and mention of the grant of the patent: **17.05.2017**
(21) Application number: 15186728.0
(22) Date of filing: 24.09.2015
(51) Int. Cl.: B64C 13/04, B64C 13/10

(54) **SELECTOR LEVER WITH FAILURE DETECTION FEATURES**
WÄHLHEBEL MIT FEHLEREFASSUNGSMERKMALEN
LEVIER DE SÉLECTION AVEC CARACTÉRISTIQUES DE DÉTECTION DE DÉFAUT

(30) Priority: 24.09.2014 US 201414495006
(43) Date of publication of application: 30.03.2016
(73) Proprietor: Hamilton Sundstrand Corporation, Windsor Locks, CT 06096-1010 (US)
(72) Inventor: CRANDALL-SEIBERT, Cory M., Roscoe, IL Illinois 61073 (US); BAINES, Andrew N., Rockton, IL Illinois 61072 (US); MAYER, Timothy Michael, Belvidere, IL Illinois 61008 (US); VOSS, Gary L., Byron, IL Illinois 61010 (US); BRADSHAW, Sean, Rockford, IL Illinois 61107 (US); GLENN, Roger F., South Beloit, IL Illinois 61080 (US)
(74) Representative: Hull, James Edward

(56) References cited:
- WO-A1-2014/084809
- US-A1- 2004 128 038
- US-A1- 2014 116 194
- US-A1- 2014 157 943

## Description

### BACKGROUND OF THE INVENTION

The present disclosure relates generally to selector levers and, more particularly, to a failure detection mechanism for selector levers that may be found, for example, in the cockpit of an aircraft.

Conventional aircraft are commonly equipped with a selector lever for manually controlling the actuation of flaps, ailerons, or other moveable features of the aircraft. The selector lever is mounted in the cockpit for the pilot to select the desired equipment configuration by moving the lever to a position corresponding to the desired equipment configuration. The conventional selector lever is typically constructed with a shaft rotatably arranged adjacent one or two detent plates. One or two detent pins corresponding to the detent plates are movably arranged on the shaft. This configuration provides a measure of redundancy that allows the selector lever to be functional after one detent pin has failed. The ability to detect the failure of one or both detent pins would reduce maintenance costs and improve aircraft safety. Accordingly, the industry is receptive to new developments that provide the capability to detect the failure of a detent pin.

WO 2014/084809 relates to a failure detection mechanism for selector lever. US 2004/0128038 relates to a lever mechanism.

### SUMMARY OF THE INVENTION

Disclosed herein is a selector lever having a shaft with a proximal end disposed in a housing and a distal end extending from the housing. A slide arranged to be movable along the shaft with a first detent pin and a second detent pin operatively connected to the slide. A first detent plate is disposed in the housing and arranged to receive the first detent pin, having a first plurality connected by a first channel. The first channel containing one or more first obstructing features. A second detent plate is disposed in the housing and having a second plurality of slots for receiving the second detent pin, the second plurality of slots being connected by a second channel. The second channel contains one or more second obstructing features, wherein the second plurality of slots are arranged to align with the first plurality of slots. The one or more second obstructing features are arranged to be not aligned with the one or more first obstructing features

Another aspect of the disclosure provides a method of detecting the failure of a selector lever.

### BRIEF DESCRIPTION OF THE DRAWINGS

The following descriptions should not be considered limiting in any way. With reference to the accompanying drawings, like elements are numbered alike:
Fig. 1 is an illustration of an aircraft according to one embodiment;
Fig. 2 is a sectioned front view of a selector lever according to one embodiment;
Fig. 3A is a sectioned side view of the selector lever shown in Fig. 2;
Fig. 3B is a partial top view of the selector lever shown in Fig. 3A;
Fig. 4A is a sectioned side view of a selector lever according to another embodiment; and
Fig. 4B is a partial top view of the selector lever shown in Fig. 4A.

### DETAILED DESCRIPTION OF THE INVENTION

A detailed description of one or more embodiments of the disclosed apparatus and method are presented herein by way of exemplification and not limitation with reference to the Figures. It is to be understood that other embodiments may be utilized and changes may be made without departing from the scope of the present disclosure. In particular, the disclosure provides various examples related to a selector lever for aircraft, whereas the advantages of the present disclosure as applied in a related field would be apparent to one having ordinary skill in the art and are considered to be within the scope of the present invention.

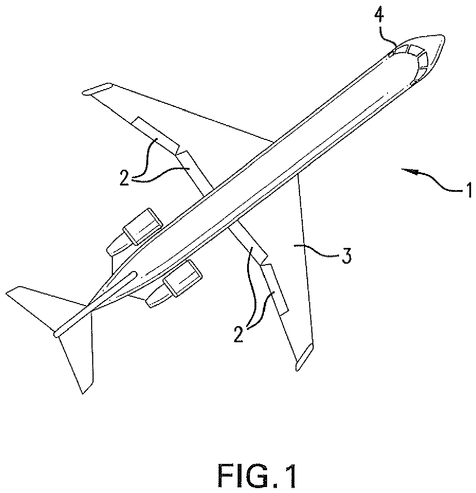

Fig. 1 shows a top view of an aircraft 1 having an aircraft actuator system that employs the selector lever of the present disclosure. For example, the selector lever of the aircraft actuator system may be used to control the position of a plurality of flaps 2 located on the wings 3 of the aircraft 1. The selector lever enables the operator (or pilot) to accurately control the position of the flaps 2 from the cockpit 4. As noted above, the selector lever is contemplated to control the position of various control surfaces, such as the flaps of an aircraft. Specifically, the selector lever is contemplated to be employed in connection with one or more of the high lift surfaces associated with an aircraft. The selector lever may find other uses, in differing environments, without departing from the scope of the present disclosure.

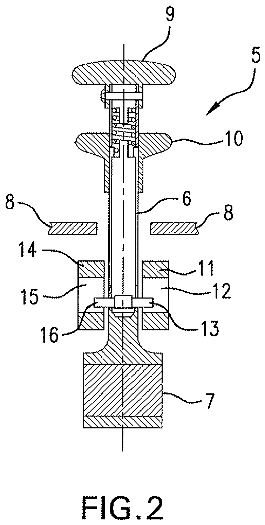

Fig. 2 is a sectioned front view of a hand-operated selector lever 5 according to one embodiment of the present disclosure. The selector lever 5 includes a shaft 6 having a proximal end that is rotatably attached to a pivot 7 that is disposed in a housing 8. The shaft 6 also comprises a distal end 9 that extends from the housing 8. A slide 10 is arranged to move along the shaft 6, the slide 10 at least partially extending from the housing 8.

Fig. 2 shows a first detent plate 11 with a plurality of slots 12 disposed in the housing 8 parallel to the path of the pivoting shaft 6. Fig. 2 further shows a first detent pin 13 arranged on the shaft 6 to engage the first plurality of slots 12 of the first detent plate 11. The first detent pin 13 is operatively connected to the slide 10 such that translational movement of the slide 10 along the shaft results in movement of the first detent pin 13.

The selector lever 5 further comprises a second detent plate 14, (having a second plurality of slots 15), arranged opposite from the first detent plate 11. Further, a second detent pin 16 is arranged on the shaft 6 to engage the second plurality of slots 15 of the second detent plate 14, the second detent pin 16
being operatively connected to the slide 10. The second detent plate 14 and second detent pin 16 mirror the first detent plate 11 and first detent pin 13.

Fig. 2 shows the selector lever 5 with the slide 10 in an engaged position. The "engaged position" refers to the position of the slide 10 when the first and second detent pins 13, 16 are inserted into one of the first or second plurality of slots 12, 15, respectively. A disengaged position of the slide 10 refers to the position of the slide when the respective first or second detent pin 13, 16 is withdrawn from the respective slot. Where the slide 10 is in the disengaged position, the shaft 6 may be rotated about the pivot 7 to a desired position of the shaft. The slide 10 can then be moved to the engaged position, which when at least one of the detent pins 13, 16 is intact, will effectively lock the shaft 6 in place.

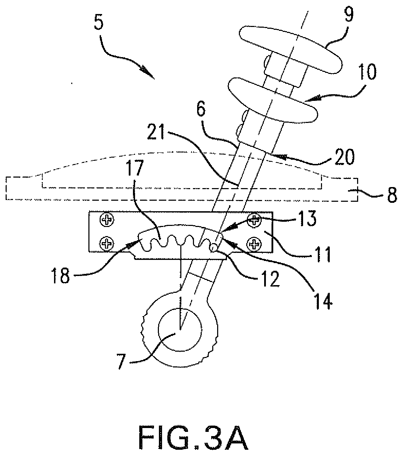

Fig. 3A illustrates the selector lever 5 facing the first detent plate 11. The detent plate 11 includes a channel 17 through which the first detent pin 13 is free to travel while in the disengaged position. Accordingly, the disengaged position of the embodiment illustrated in Fig. 3A corresponds to a radial position of the first detent pin 13 that is complemented by the arrangement of the channel 17. The second detent plate 14 (see Fig. 2) also contains a similar channel. The channel 17 may be a configured at a radius from the pivot 7 corresponding to the disengaged position. The selector lever 5 may also comprise a disengaged indicator 20 that provides a visual indication to the operator that the selector lever is disengaged and that the detent pin 13 is thereby positioned in the channel 17.

The selector lever 5 further includes one or more obstructing features in the channel 17 of one or both detent plates to test for a detent pin failure. A first obstructing feature 18 is placed in the channel 17 of the first detent plate 11, shown at one end of the channel 17. A second obstructing feature 19 is placed in the channel 17 of the second detent plate 14. The obstructing features 18, 19 are placed at different locations in the channels 17 of the respective detent plates 11, 14. The obstructing features 18, 19 may, for example, be formed as force ramps at the ends of the channel 17 (as shown), but may also be gates, ramps at other locations in the channel 17, or tactile sections including bumps that would be felt by the operator while moving the shaft 6 through the obstructing features 18, 19 while the respective detent pins 13, 16 are intact. The selector lever 5 may include a plurality of obstructing features 18, 19 on each detent plate 11, 14. The first obstructing feature 18 of the first detent plate 11 should not be aligned with the second obstructing feature 19 of the second detent plate 14. This arrangement allows the operator to test for a failure of the detent pins 13, 16 individually.

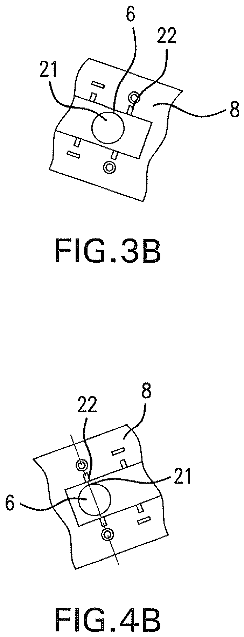

Fig. 3B shows an alignment indicator 21 on the shaft, which is useful in determining the position of the shaft with respect to the obstructing features while moving the detent pins 13, 16 through the channel 17. Fig. 3B further shows a corresponding position indicator 22 located on the housing 8. The position indicator may, for example, be arranged directly above one or more of the obstructing features 18, 19.

The selector lever 5 may also comprise one or more biasing elements. For example, a first biasing element biases the slide towards an engaged position.

The selector lever 5 of the present disclosure may be used to test the whether the detent pins 13, 16 remain intact. The detent pins 13, 16 are tested individually, without removing the housing 8 or requiring other maintenance procedures. For example, when moving the shaft 6 from one position to another, the operator can judge the integrity of the detent pins 13, 16 by observing the respective indicators 20, 21, 22.

Figs. 3A and 3B illustrate the selector lever 5 in a position to test the second detent pin 16. First, the operator moves the shaft 6 to position the first detent pin 13 at the location of the second obstructing feature 19. The operator moves the shaft 6 towards the position of the second obstructing feature 19, keeping the slide 10 in the disengaged position, as shown by the presence of the disengaged indicator 20. With the slide 10 held in the disengaged position, the operator will be unable to move the shaft into the location of the second obstructing feature 19 while the second detent pin 16 is intact. This position is shown in Fig. 3B, where the alignment indicator 21 does not align with the position indicator 22. Thus, if the operator is unable to move the shaft 6 to align the alignment indicator 21 with the position indicator 22 while the disengaged indicator 20 is visible, the operator may conclude that the respective detent pin is intact.

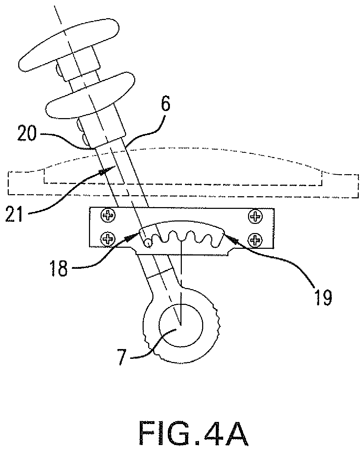

The same procedure may then be used to determine the integrity of the remaining detent pin. For example, Figs. 4A and 4B illustrate the selector lever 5 of the present disclosure where the first detent pin 13 is proven to have failed. As with the example of Figs. 3A and 3B, the operator moves the shaft 6 towards the position of the first obstructing feature 18, while maintaining the slide 10 in the disengaged position, as shown by the presence of the disengaged indicator 20. With the first detent pin 13 having failed, the operator is able to align the alignment indicator 21 with the position indicator 22, as shown in Fig. 4B.

## Claims

1. A selector lever (5), comprising:
a shaft (6) having a proximal end disposed within a housing (8), the shaft (6) having a distal end (9) extending from the housing (8);
a slide (10) arranged to be movable along the shaft (6);
a first detent pin (13) operatively connected to the slide (10);
a second detent pin (16) operatively connected to the slide (10);
a first detent plate (11) disposed in the housing (8) and having a first plurality of slots (12) for receiving the first detent pin (13), the first plurality of slots (12) connected by a first channel (17), the first channel (17) containing one or more first obstructing features (18); and
a second detent plate (14) disposed in the housing (8) and having a second plurality of slots (15) for receiving the second detent pin (16), the second plurality of slots (15) being connected by a second channel (17), the second channel (17) containing one or more second obstructing features (19), wherein the second plurality of slots (15) are arranged to align with the first plurality of slots (12), and the one or more second obstructing features (19) are arranged to be not aligned with the one or more first obstructing features (18).

2. The selector lever (5) of claim 1, wherein the one or more first obstructing features (18) and the one or more second obstructing features (19) includes one or more force ramps.

3. The selector lever (5) of claim 1, wherein the one or more first obstructing features (18) and the one or more second obstructing features (19) includes one or more tactile features.

4. The selector lever (5) of claim 1, 2 or 3, wherein the proximal end of the shaft (6) is rotatably attached to a pivot (7).

5. The selector lever (5) of any preceding claim, further comprising a disengaged indicator (20) arranged on the shaft (6).

6. The selector lever (5) of any preceding claim, further comprising an alignment indicator (21) arranged on the shaft (6) and one or more position indicators (22) arranged on the housing (8), the one or more position indicators (22) being arranged at a location corresponding to one of the first or second obstructing features (18,19).

7. The selector lever (5) of any preceding claim, further comprising a biasing element arranged to bias the slide (10) towards an engaged position.

8. A method of detecting the failure of a selector lever (5) according to claim 1, comprising:
placing the slide (10) in a disengaged position along the shaft (6), the slide (10) operatively connected to the first and second detent pins (13,16) the pins being received into one of the first or second plurality of slots (12, 15) in an engaged position of the slide (10), the disengaged position corresponding to locating the first or second detent pins (13,16) in the channel (17) within the first or second detent plates (11,14);
moving the shaft (6) into a position corresponding to the obstructing feature (18,19) located in the channel (17); and
determining whether or not the first or second detent pins (13,16) has failed by evaluating the position of the shaft (6) relative to the location of the obstructing feature (18,19) while the slide (10) is in the disengaged position.

9. The method of claim 8, wherein the step of determining whether or not the first or second detent pins (13,16) has failed includes exerting a force on the shaft (6) to move the first or second detent pins (13,16) into the location of the obstructing feature (18,19).

10. The method of claim 8 or 9, wherein the step of determining whether or not the first or second detent pins (13,16) has failed includes comparing the location of an alignment indicator (21) with the location of a position indicator (22) while the slide (10) is in a disengaged position.

## Patentansprüche

1. Wählhebel (5), umfassend:
einen Schaft (6) mit einem proximalen Ende, das in einem Gehäuse (8) angeordnet ist, wobei der Schaft (6) ein distales Ende (9) aufweist, das sich von dem Gehäuse (8) erstreckt;
einen Schieber (10), der so angeordnet ist, dass er entlang des Schafts (6) beweglich ist;
einen ersten Rastbolzen (13), der mit dem Schieber (10) in Wirkverbindung steht;
einen zweiten Rastbolzen (16), der mit dem Schieber (10) in Wirkverbindung steht;
eine in dem Gehäuse (8) angeordnete erste Sperrplatte (11) mit einer ersten Vielzahl von Schlitzen (12) zum Aufnehmen des ersten Rastbolzens (13), wobei die erste Vielzahl von Schlitzen (12) durch einen ersten Kanal (17) verbunden ist, wobei der erste Kanal (17) ein oder mehrere erste Versperrmerkmale (18) enthält; und
eine in dem Gehäuse (8) angeordnete zweite Sperrplatte (14) mit einer zweiten Vielzahl von Schlitzen (15) zum Aufnehmen des zweiten Rastbolzens (16), wobei die zweite Vielzahl von Schlitzen (15) durch einen zweiten Kanal (17) verbunden ist, wobei der zweite Kanal (17) ein oder mehrere zweite Versperrmerkmale (19) enthält, wobei die zweite Vielzahl von Schlitzen (15) angeordnet ist, um an der ersten Vielzahl von Schlitzen (12) ausgerichtet zu sein, und das eine oder die mehreren zweiten Versperrmerkmale (19) angeordnet sind, um nicht an dem einen oder den mehreren ersten Versperrmerkmalen (18) ausgerichtet zu sein.

2. Wählhebel (5) nach Anspruch 1, wobei das eine oder die mehreren ersten Versperrmerkmale (18) und das eine oder die mehreren zweiten Versperrmerkmale (19) ein oder mehrere Kraftrampen aufweisen.

3. Wählhebel (5) nach Anspruch 1, wobei das eine oder die mehreren ersten Versperrmerkmale (18) und das eine oder die mehreren zweiten Versperrmerkmale (19) ein oder mehrere taktile Merkmale beinhalten.

4. Wählhebel (5) nach Anspruch 1, 2 oder 3, wobei das proximale Ende des Schafts (6) drehbar an einem Drehpunkt (7) angebracht ist.

5. Wählhebel (5) nach einem der vorhergehenden Ansprüche, weiter umfassend eine an dem Schaft (6) angeordnete Ausrückanzeige (20).

6. Wählhebel (5) nach einem der vorhergehenden Ansprüche, weiter umfassend eine an dem Schaft (6) angeordnete Ausrichtungsanzeige (21) und eine oder mehrere an dem Gehäuse (8) angeordnete Positionsanzeigen (22), wobei die eine oder die mehreren Positionsanzeigen (22) an einem Ort angeordnet sind, der einem der ersten oder zweiten Versperrmerkmale (18,19) entspricht.

7. Wählhebel (5) nach einem der vorhergehenden Ansprüche, weiter umfassend ein Vorspannelement, das dazu angeordnet ist, den Schieber (10) in eine Eingriffsposition vorzuspannen.

8. Verfahren zum Erfassen des Ausfalls eines Wählhebels (5) nach Anspruch 1, umfassend:
Platzieren des Schiebers (10) in einer Ausrückposition entlang des Schafts (6), wobei der Schieber (10) mit dem ersten und dem zweiten Rastbolzen (13,16) in Wirkverbindung steht, wobei die Bolzen in einer der ersten oder zweiten Vielzahl von Schlitzen (12,15) in einer Eingriffsposition des Schiebers (10) aufgenommen sind, wobei die Ausrückposition dem Anordnen des ersten oder des zweiten Rastbolzen (13,16) in dem Kanal (17) in der ersten oder der zweiten Sperrplatte (11,14) entspricht;
Bewegen des Schafts (6) in eine Position, die dem in dem Kanal (17) angeordneten Absperrmerkmal (18,19) entspricht; und
Bestimmen, ob der erste oder der zweite Rastbolzen (13,16) ausgefallen ist oder nicht, indem die Position des Schafts (6) relativ zu dem Ort des Versperrmerkmals (18,19) evaluiert wird, während der Schieber (10) sich in der Ausrückposition befindet.

9. Verfahren nach Anspruch 8, wobei der Schritt des Bestimmens, ob der erste oder der zweiten Rastbolzen (13,16) ausgefallen ist oder nicht, das Ausüben einer Kraft auf den Schaft (6) beinhaltet, um den ersten oder den zweiten Rastbolzen (13,16) an den Ort des Versperrmerkmals (18,19) zu bewegen.

10. Verfahren nach Anspruch 8 oder 9, wobei der Schritt des Bestimmens, ob der erste oder der zweite Rastbolzen (13,16) ausgefallen ist oder nicht, das Vergleichen des Orts einer Ausrichtungsanzeige (21) mit dem Ort einer Positionsanzeige (22) beinhaltet, während der Schieber (10) sich in einer Ausrückposition befindet.

## Revendications

1. Levier de sélection (5) comprenant :
un arbre (6) présentant une extrémité proximale disposée dans un logement (8), l'arbre (6) présentant une extrémité distale (9) s'étendant depuis le logement (8) ;
un coulisseau (10) agencé pour être mobile le long de l'arbre (6) ;
une première goupille de déclenchement (13) reliée en fonctionnement au coulisseau (10) ;
une seconde goupille de déclenchement (16) reliée en fonctionnement au coulisseau (10) ;
une première plaque de détente (11) disposée dans le logement (8) et présentant une première pluralité de fentes (12) pour recevoir la première goupille de déclenchement (13), la première pluralité de fentes (12) étant reliée par un premier canal (17), le premier canal (17) contenant un ou plusieurs premiers éléments d'obstruction (18) ; ; et
une seconde plaque de détente (14) disposée dans le logement (8) et présentant une seconde pluralité de fentes (15) pour recevoir la seconde goupille de déclenchement (16), la seconde pluralité de fentes (15) étant reliée par un second canal (17), le second canal (17) contenant un ou plusieurs seconds éléments d'obstruction (19), dans lequel la seconde pluralité de fentes (15) est agencée pour s'aligner sur la première pluralité de fentes (12), et l'un ou plusieurs seconds éléments d'obstruction (19) sont agencés pour ne pas être alignés sur l'un ou plusieurs premiers éléments d'obstruction (18).

2. Levier de sélection (5) selon la revendication 1, dans lequel l'un ou plusieurs premiers éléments d'obstruction (18) et l'un ou plusieurs seconds éléments d'obstruction (19) incluent une ou plusieurs rampes de force.

3. Levier de sélection (5) selon la revendication 1, dans lequel l'un ou plusieurs premiers éléments d'obstruction (18) et l'un ou plusieurs seconds éléments d'obstruction (19) incluent un ou plusieurs éléments tactiles.

4. Levier de sélection (5) selon la revendication 1, 2 ou 3, dans lequel l'extrémité proximale de l'arbre (6) est attachée de manière rotative à un pivot (7).

5. Levier de sélection (5) selon une quelconque revendication précédente, comprenant en outre un indicateur désengagé (20) agencé sur l'arbre (6).

6. Levier de sélection (5) selon une quelconque revendication précédente, comprenant en outre un indicateur d'alignement (21) agencé sur l'arbre (6) et un ou plusieurs indicateurs de position (22) agencés sur le logement (8), l'un ou plusieurs indicateurs de position (22) étant agencés à un emplacement correspondant à un des premier ou second éléments d'obstruction (18, 19).

7. Levier de sélection (5) selon une quelconque revendication précédente, comprenant en outre un élément d'inclinaison agencé pour incliner le coulisseau (10) vers une position engagée.

8. Procédé de détection du défaut d'un levier de sélection (5) selon la revendication 1, comprenant :
le placement du coulisseau (10) dans une position désengagée le long de l'arbre (6), le coulisseau (10) relié en fonctionnement aux première et seconde goupilles de déclenchement (13, 16), les goupilles étant reçues dans une de la première ou seconde pluralité de fentes (12, 15) dans une position engagée du coulisseau (10), la position désengagée correspondant au positionnement des première ou seconde goupilles de déclenchement (13, 16) dans le canal (17) dans les première ou seconde plaques de détente (11, 14) ;
le déplacement de l'arbre (6) dans une position correspondant à l'élément d'obstruction (18, 19) situé dans le canal (17) ; et
la détermination de si la première ou seconde goupille de déclenchement (13, 16) a fait défaut ou non par évaluation de la position de l'arbre (6) par rapport à l'emplacement de l'élément d'obstruction (18, 19) alors que le coulisseau (10) est dans la position désengagée.

9. Procédé selon la revendication 8, dans lequel l'étape de détermination de si la première ou seconde goupille de déclenchement (13, 16) a fait défaut ou non, inclut l'exercice d'une force sur l'arbre (6) pour déplacer la première ou seconde goupille de déclenchement (13, 16) dans l'emplacement de l'élément d'obstruction (18, 19).

10. Procédé selon la revendication 8 ou 9, dans lequel l'étape de détermination de si la première ou seconde goupille de déclenchement (13, 16) a fait défaut ou non, inclut la comparaison de l'emplacement d'un indicateur d'alignement (21) avec l'emplacement d'un indicateur de position (22) alors que le coulisseau (10) est dans une position désengagée.
